Europäisches Patentamt

European Patent Office

Office européen des brevets

(11) Publication number: **0 507 753 A1**

# EUROPEAN PATENT APPLICATION

(21) Application number: **92830168.8**

(22) Date of filing: **03.04.92**

(51) Int. Cl.5: **B65D 5/46**, B31D 1/06, B32B 3/04

(30) Priority: **04.04.91 IT RM910078 U**

(43) Date of publication of application:
**07.10.92 Bulletin 92/41**

(84) Designated Contracting States:
**AT BE DE ES FR GB IT NL**

(71) Applicant: **COMPACK INTERNATIONAL S.r.l.**
**Via Mola Vecchia, 2**
**I-03100 Frosinone(IT)**

(72) Inventor: **Simonelli, Augusto**
**69, Via Misurina**
**I-00135 Rome(IT)**

(74) Representative: **Gervasi, Gemma et al**
**NOTARBARTOLO & GERVASI Srl Viale**
**Bianca Maria 33**
**I-20122 Milan(IT)**

(54) Reinforced flexible band and associated procedure and equipment for its continuous production.

(57) The present invention relates to a reinforced flexible band in which the reinforcement consists of a strip (2) of fabric or cloth, said band being made with biodegradable material.

The flexible band in accordance with the present invention can be employed in the field of packaging and in particular for the manufacture of handles for envelopes and containers in general, particularly boxes.

FIG. 1

EP 0 507 753 A1

## Field of the invention

The present invention relates to a reinforced flexible band realized in biodegradable material, e.g. paper, and in which the reinforcement consists of a strip of fabric or cloth so that the final product can be biodegradable.

The present invention relates also to a procedure and associated equipment for the continuous production of said band.

The flexible band in accordance with the present invention can be employed in the field of packaging and in particular for the production of handles for envelopes and containers in general, particularly boxes.

## Prior art

In the field of packaging and for the production of handles, flexible bands realized in various materials are known.

For instance, on the market there are plastic and paper bands which, however, do not have sufficient tensile strength and can consequently cause difficulties when employed to make handles for containers.

Indeed, when the fixing of said handles (and in particular those of paper) is performed by means of slots and/or rivets it is very easy that there be yielding and breakage of the handle in the fixing area.

In addition, the environmental problems are increasingly turning towards the use of biodegradable materials so that it is considered necessary to provide for bands in nonpolluting materials which are at the same time very resistant against traction.

## Summary of the invention

The object of the present invention is the production of a flexible band particularly resistant to traction and, at the same time, biodegradable.

In accordance with the present invention the reinforced flexible band is achieved by the coupling of a strip of biodegradable material and a strip of fabric or cloth also of biodegradable material.

The strip of biodegradable material is preferably of cellulose and is appropriately folded so that inside it the strip of cloth or fabric is inserted as reinforcement.

Biodegradable materials which can be advantageously employed for the realization of the band are selected among paper, light cardboard, cotton and biodegradable plastics.

The strip of cloth is made integral with the strip e.g. by glueing or mutual penetration with the material constituting the ribbon (in particular when using biodegradable plastics) so as to remain fixed in its position inside the band. It must therefore have a weft/warp such as to allow perfect penetration of the glue or the material constituting the ribbon, creating a single body with the ribbon, without producing ravelling and unsightly points if cuts are made in the band.

The glue to be employed, preferably biodegradable, should be selected so as not to stiffen the band but facilitate winding on itself and convenience of use.

Glues particularly preferred are those with a vinyl base.

The band in accordance with the present invention can be produced in the most varied sizes and lengths.

Said band can be cut in portions of appropriate size to be applied as a handle on envelopes and containers of various types.

Application can be performed by glueing of the ends of the portion of the band.

In a preferred embodiment, application on envelopes and containers can be done with slots and/or rivets.

Particularly preferred, because economically advantageous, is the embodiment which calls for insertion of the strip of cloth only in the area involved by the slots and/or rivets.

The band can also be coloured and printed in accordance with conventional methodologies.

## Detailed description of the invention

A preferred embodiment of the present invention, if the ribbon consists of cellulose material, such as paper, light cardboard and the like, includes the following processing steps:
- the ribbon of cellulose material, usually coiled, is spread with glue on one of its sides;
- on the central part of said ribbon is placed the reinforcing strip, which is about one third the width of the ribbon, leaving at the sides of said strip two free edges of the ribbon;
- first one edge and then the other are folded longitudinally over the reinforcing strip;
- the ribbon, reinforcement and glue assembly (the reinforced band of the invention) thus folded is then subjected to a drying treatment and to successive treatments designed for packaging and utilization thereof.

In particular the band can be slotted in accordance with known techniques, i.e. subjected to a longitudinal cut which allows its utilization by rivetting.

In accordance with a preferred embodiment, the reinforcing strip can be inserted not for the entire length of the ribbon but only in definite zones not connected together, i.e. those zones where connection is to be made with the container.

In this manner production costs are greatly reduced.

A preferred device which achieves the above described process is the following. It includes in a cooperative relationship:

- a feed unit for the paper ribbon optionally associated with a braking system;
- a feed unit for the reinforcing strip;
- a glueing unit, e.g. comprising a glue spreading system, a metering system for the quantity of glue per surface area of the paper, a tank for the glue and a system of collecting the glue near the metering system;
- a forming unit;
- a drying unit, e.g. consisting of an insulated chamber with circulation of hot air by ventilation or consisting of two successive cylinders, one for the actual drying, having preferably a temperature of approximately 180°C, and one for the cooling, having preferably a temperature of approximately -10°C so as to bring the band of the present invention to room temperature;
- a traction unit, e.g. realized with a direct-current powered roller with rubber-coated counter-roller for pressure;
- a winding unit with a variable speed rotation system at constant tension to compensate for the increased diameter of the coil.

The forming unit comprises a series of rollers having shape and arrangement such that, during running of the paper ribbon and the reinforcement strip, the fold of said paper ribbon and of the assembly consisting of the paper ribbon and reinforcement strip is produced.

The characteristics and advantages of the invention will now be illustrated with reference to the annexed figures wherein an embodiment thereof is shown by way of nonlimiting example.

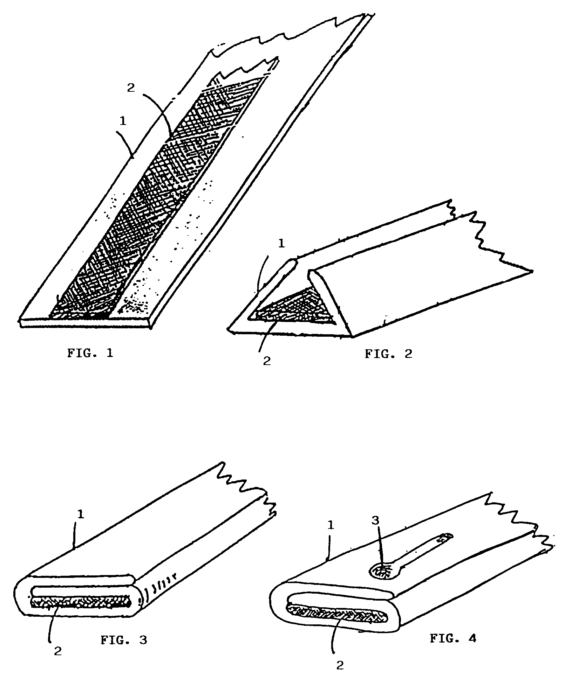

FIG. 1 shows a perspective view of the elements which make up the ribbon of the present invention.

With particular reference to said figure, reference number 1 indicates the ribbon of biodegradable material, such as seamless paper or light cardboard or biodegradable plastic on which the reinforcing strip of cloth or fabric 2 is placed.

The dimensions of the ribbon 1 and the strip 2 are obviously to be appropriate for the use of the band and the required strength for the intended use.

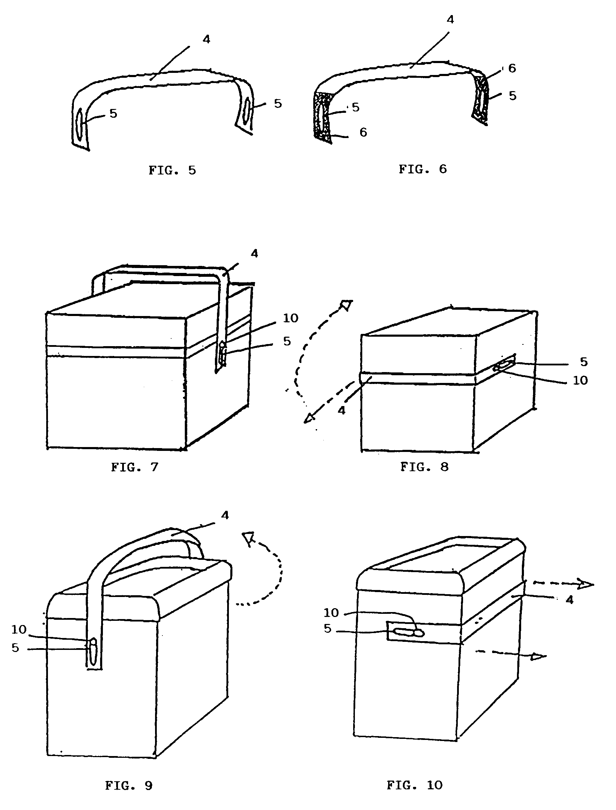

The strip 2 need not be applied on the entire length of the ribbon 1 but can be positioned at predetermined intervals on said ribbon 1 in zones thereof (those where the slot is made) which are subject to greater stress by traction forces (see FIG. 6.

FIG. 2 shows the edges of the ribbon 1 not covered by the strip 2 partially folded thereon.

Obviously, this folding is continued for the entire length of the ribbon 1 and even in the zones where the reinforcement 2 is absent.

FIG. 3 shows a portion of the finished band where the ribbon 1 is folded so as to entirely cover the strip 2.

FIG. 4 shows a preferred embodiment of the ribbon with slot 3.

FIGS. 5 and 6 show examples of handles achieved with portions of the band in accordance with the present invention.

Reference number 4 indicates the handle and 5 the slot made in said handle.

In FIG. 6 in particular reference number 6 indicates the zones of the handle which are involved in the application of the fabric reinforcement.

FIGS. 7-10 show containers in box form of the known type used to contain detersives and producible with paper material and to which the handle 4 is applied with slots 5 and rivets 10.

FIGS. 8 and 10 in particular show how the slots allow the handle to remain adherent to the box in rest position and thus facilitate grasping when the handle is withdrawn outward and upward to be grasped.

FIGS. 11-17 illustrate the forming roller systems which, in a succession analogous to the enumeration of the figures, permit achieving the fold of the band of the present invention.

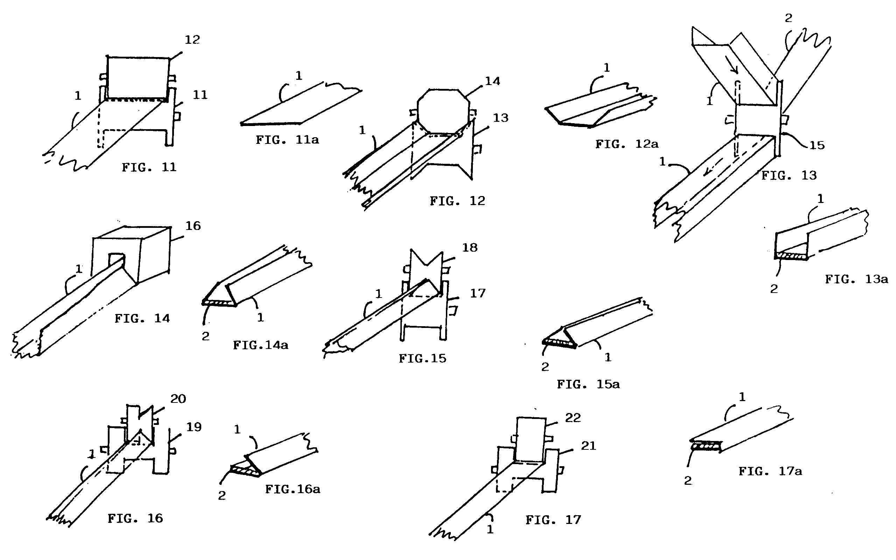

As shown in FIG. 11, the ribbon 1, spread with glue, passes through two rollers 11 and 12 shaped to measure which flatten and stretch it.

FIG. 11a shows schematically the cross section of the ribbon 1.

As shown in FIG. 12, the shaped rollers 13 and 14 give the ribbon a fold which assists housing of the reinforcing strip.

FIG. 12a shows schematically the cross section of the ribbon 1 in this phase.

As shown in FIG. 13, the roller 15 folds again to 90° the edges of the ribbon 1 between which the strip 2 is rested.

FIG. 13a shows schematically the cross section of the ribbon 1 in this phase.

As shown in FIG. 14, subsequently the shape 16 takes the fold of the edges of the ribbon 1 from 90° to approximately 45°.

FIG. 14a shows schematically the cross section of the ribbon 1 in this phase.

As shown in FIG. 15, the subsequent passage is accomplished through two shaped rollers 17 and 18 which bring nearer the ribbon edges.

FIG. 15a shows schematically the cross section of the ribbon 1 in this phase.

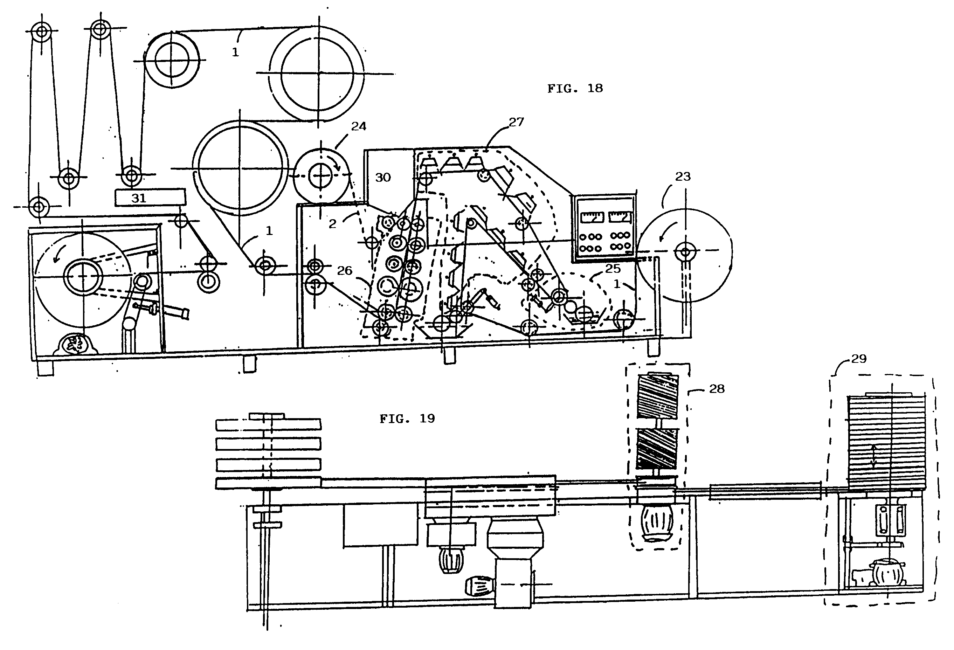

As shown in FIG. 16, the assembly consisting of the ribbon 1 and reinforcement (not shown) passes through the two shaped rollers 19 and 20 which squash one of the two edges of the ribbon 1 on the reinforcement, the last stage of the formation being completed, as shown in FIG. 17, by the shaped rollers 21 and 22 which compress the band formed, permitting total glueing.

FIGS. 16a and 17a show schematically the cross section of the ribbon 1 in the phases shown in FIGS. 16 and 17 respectively.

FIGS. 18 and 19 show a schematic front and plan view respectively of the device of the present invention.

The reference numbers indicate as follows: 23 the feed unit of the ribbon 1, 24 the feed unit of the reinforcement 2, 25 the glueing unit, 26 the forming unit which includes the roller systems shown in FIGS. 11-17, 27 the drying system consisting of individual heat supplies, 28 the product traction unit, and 29 the product winding unit.

There can be provided a system 30 for cutting the reinforcement 2 in portions and optionally a system 31 of timed punching for making the slots, which would control the strokes based on the distance to which it is desired to punch.

The band described in accordance with the present invention is particularly advantageous because it has very high tensile strength so that it is reliable even when used to make handles to be applied with slots and/or rivets to containers of considerable capacity, i.e. designed to support considerable weights.

Nonstandard tensile strength tests have actually been made on boxes equipped with slotted and riveted handles made of plastic or totally of paper and folded on themselves to increase tensile strength. Satisfactory results were obtained only with the product of the present invention whereas the others were all torn at the slot.

Another advantage of the band of the present invention is the fact that it is entirely biodegradable and flexible and can be produced in elevated measurements and packed on coils or spools of 1500m to 4000m or more.

The advantages of the device in accordance with the present invention arise from the fact that it is extremely compact (it can be housed in a space of less than 10 meters), develops high linear speed (on the order of 190-200 meters per minute or higher) and can be managed easily and economically and practically does not produce scrap material.

## Claims

1. Reinforced flexible and biodegradable band characterized in that the reinforcement consists of a strip (2) of cloth or fabric, said band being obtained by coupling between the strip (2) and a ribbon (1) of biodegradable material like cellulose or biodegradable plastics.

2. Reinforced flexible and biodegradable band characterized in that the reinforcement consists of a strip (2) of cloth or fabric, said band being obtained from a ribbon (1) of biodegradable material which is folded back and inside which the reinforcement strip (2) is inserted.

3. Band in accordance with claim 2 wherein the strip (2) is glued in such a manner as to remain fixed in its position inside the band.

4. Band in accordance with claims 1-3 wherein the reinforcement (2) is present inside the band for its entire length.

5. Band in accordance with claims 1-3 wherein the reinforcement (2) is positioned inside the band in predetermined zones.

6. Process for the manufacture of a flexible reinforced and biodegradable band characterized in that the reinforcement consists of a strip (2) of cloth or fabric, said band being obtained from a ribbon (1) of biodegradable material which is folded and inside which is inserted the reinforcement strip (2), said process comprising the following processing phases:
   - the ribbon (1) is spread with glue on one of its surfaces;
   - on the central part of said ribbon is placed the reinforcement strip (2) of a width approximately one third that of the ribbon, being left at the sides of said strip two free edges of the ribbon( 1);
   - longitudinal folding then takes place, first of one edge then of the other; over the reinforcement strip (2);
   - the assembly consisting of ribbon (1), reinforcement (2) and glue is then subjected to a drying treatment and subsequent treatments for its packaging and use.

7. Device for the manufacture of a flexible reinforced and biodegradable band characterized in that the reinforcement consists of a strip (2) of cloth or fabric, said band being obtained from a ribbon (1) of biodegradable material which is folded and inside which is inserted the reinforcement strip (2), said device comprising, in a cooperation relationship:
   - a ribbon (1) feed unit (23),
   - a reinforcement strip (2) feed unit (24),
   - a glueing unit (25),
   - a forming unit (26),

- a drying unit (27),
- a traction unit (28), and
- a winding unit (29),

the forming unit (26) comprising a series of rollers (11, 12, 13, 14, 15, 16, 17, 18, 19, 20, 21, 22) having shape and arrangement such that, during running of the paper ribbon (1) and the reinforcement strip (2), the fold of said paper ribbon (1) and of the assembly consisting of the paper ribbon (1) and the reinforcement strip (2) is produced.

8. Use of the band in accordance with claims 1-5 for the manufacture of handles (4) for containers.

FIG. 1

FIG. 2

FIG. 3

FIG. 4

FIG. 5

FIG. 6

FIG. 7

FIG. 8

FIG. 9

FIG. 10

7

FIG. 11

FIG. 11a

FIG. 12

FIG. 12a

FIG. 13

FIG. 13a

FIG. 14

FIG.14a

FIG.15

FIG. 15a

FIG. 16

FIG.16a

FIG. 17

FIG. 17a

EP 0 507 753 A1

FIG. 18

FIG. 19

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | GB-A-359 145 (D.C. DUMOSCH ET AL) <br> * the whole document * | 1-6,8 | B65D5/46 <br> B31D1/06 <br> B32B3/04 |
| Y | US-A-4 292 366 (FULTON, JR) <br> * the whole document * | 1-6,8 | |
| A | GB-A-1 604 412 (I.W.S. NOMINEE COMPANY LIMITED) <br> * the whole document * | 1-8 | |
| A | GB-A-747 283 (J.D. CRARY) <br> * claims; figures * | 1-8 | |
| A | US-A-2 635 510 (F.A. GRANT) <br> * claims; figure 5 * | 7 | |
| A | GB-A-915 371 (A.WINDMOLLER) <br> * page 4, line 5 - line 47; claim 23; figure 17 * | 7 | |

TECHNICAL FIELDS SEARCHED (Int. Cl.5 )

B65D
B31D
B32B
B31B

The present search report has been drawn up for all claims

| Place of search | Date of completion of the search | Examiner |
|---|---|---|
| THE HAGUE | 10 JULY 1992 | DE JONGE S.J.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)